# EUROPEAN PATENT SPECIFICATION

(11) **EP 2 265 518 B1**
(45) Date of publication and mention of the grant of the patent: **17.07.2024**
(21) Application number: 09735695.0
(22) Date of filing: 14.04.2009
(51) Int. Cl.: B65F 5/00, B65G 53/50

(54) **METHOD AND PNEUMATIC MATERIAL CONVEYING SYSTEM**
VERFAHREN UND PNEUMATISCHES MATERIALFÖRDERSYSTEM
PROCÉDÉ ET SYSTÈME PNEUMATIQUE DE TRANSPORT DE MATÉRIAU

(30) Priority: 22.04.2008 FI 20085344
(43) Date of publication of application: 29.12.2010
(73) Proprietor: Maricap OY, 01450 Vantaa (FI)
(72) Inventor: SUNDHOLM, Göran, FI-04310 Tuusula (FI)
(74) Representative: Papula Oy
(86) International application number: PCT/FI2009/050279
(87) International publication number: WO 2009/130374

(56) References cited:
- EP-A1- 0 596 750
- EP-A1- 0 596 750
- EP-B1- 1 165 406
- AU-B2- 433 910
- FR-A1- 2 273 743
- GB-A- 1 408 439
- JP-A- S5 338 173
- JP-A- S5 338 173
- JP-U- S5 479 780
- JP-U- S5 479 780
- US-A- 2 791 470
- US-B1- 6 217 261

## Description

### Background of invention

The invention relates to a method according to the preamble of claim 1.

The invention also relates to a pneumatic material conveying system according to claim 6.

The invention relates generally to pneumatic material conveying systems, such as vacuum conveying systems, particularly to collecting and conveying waste, for instance household waste.

There are known systems where waste is conveyed in a piping by means of suction. In these, waste is conveyed by suction for long distances in the piping. Typical for them is that a vacuum apparatus is used for achieving a pressure difference, in which apparatus underpressure in the conveyor pipe is provided with vacuum generators, such as vacuum pumps or ejector equipment. In the conveyor pipe, there is typically arranged at least one valve element, and by opening and closing said valve element, make-up air coming in the conveyor pipe is regulated. In the systems, at the material supply end, there are used supply tanks, in which the material, such as waste material, is fed and through which the material to be conveyed is conveyed to the conveyor pipe by opening a drain valve element, so that by means of the suction effect created in the conveyor pipe by the underpressure prevailing therein, together with the ambient air pressure effective through the tank, there is conveyed material, such as waste material packed in bags, from the supply tank to the conveyor pipe. In that case typically part of the makeup air required in the material supply has entered the conveyor pipe through the supply tank, and draws along with it the material to be conveyed from the supply tank to the conveyor pipe. In the supply tanks, the material to be fed is, however, sometimes packed on the bottom of the tank, in the vicinity of the outlet aperture of the supply tank. When the connection from the supply tank to the conveyor pipe is opened, the material packed in the vicinity of the outlet aperture may block the outlet aperture, or prevent the access of makeup air from the supply tank to the conveyor pipe. In the publication GB 1522631, there is described an arrangement where in the vicinity of the outlet aperture and outlet valve, there is arranged a so-called vacuum break, through which makeup air can, when necessary, proceed to the vicinity of the outlet aperture and further to the transport pipe. The drawback with the arrangement of said publication is that the material may yet block the makeup air conduit, in which case it does not function in a satisfactory way.

Document JP S54 79780 U discloses a method for draining the tank space of a supply tank of a pneumatic material conveying from waste material. In the method the tank space is drained to a conveyor pipe by removing a fork from in the tank space of the tank, so that the underpressure prevailing in the conveyor pipe, together with the ambient pressure prevailing in the supply tank, conveys material from the supply tank to the conveyor pipe.

Document EP 1 165 406 B1 discloses a method and a system in accordance with the preambles of claims 1 and 6, respectively.

The object of the present invention is to realize a completely new arrangement in connection with the supply tank of material conveying systems, by means of which arrangement, the drawbacks of known systems are avoided.

### Brief description of invention

The invention is based on an idea where in the supply tank, there is made a narrowing inner wall i.e. partition wall, so that the makeup air conduit is arranged in a space left between the inner wall and the outer wall, from which there is provided a connection, preferably an annular gap, to the vicinity of the outlet aperture.

The method according to the invention is characterized by what is set forth in claim 1.

Moreover, the method according to the invention may comprise the features set forth in claims 2-5.

The pneumatic material conveying system according to the invention is characterized by what is set forth in claim 6.

The system according to the invention may comprise the features set forth in claims 7-9.

The arrangement according to the invention has several remarkable advantages. By means of the invention, there is obtained a fast and efficient draining of the supply tank to the conveyor pipe. By means of the method and arrangement according to the invention, makeup air is conducted in the vicinity of the outlet aperture so that it affects the material, such as waste material, as efficiently as possible. At the same time, however, it is possible to avoid the blocking of the outlet aperture of the supply tank, so that the operation of the material conveying system remains good. By bringing makeup air to the vicinity of the outlet aperture of the supply tank and by conducting the material by means of a partition wall element towards the outlet aperture, so that the makeup air affects the material to be discharged in the vicinity of the outlet aperture, at least during the draining step, there is achieved an extremely secure draining of the tank. By bringing makeup air to the bottom part of the material space, in the section left between the bottom part of the partition wall and the drain valve, it is possible to efficiently affect the material to be conveyed in the vicinity of the outlet aperture. By guiding the material by a partition wall that is a wall narrowing towards the outlet aperture, there is achieved an efficient, simple and functional structure for realizing the method. By bringing makeup air particularly to the section left between the bottom part of the partition wall element and the outlet aperture, there is achieved an efficient effect to the material to be conveyed. By bringing makeup air through a path that at least partly surrounds the partition wall, at least the bottom part thereof, there is achieved an efficient manipulative effect of the makeup air flow to the material to be conveyed on all sides thereof. In addition, in the method the access of makeup air to the vicinity of the outlet aperture can be adjusted, which means that for example the effect on the material can be modified. According to the invention, there can be used material supply tanks that are waste feed points, such as garbage bins or refuse chutes. The method and arrangement according to the invention are particularly well suited to be used in connection with conveyor systems of waste material, such as waste material arranged in bags.

### Brief description of drawings

The invention is explained in more detail below, by means of an example and with reference to the appended drawings, where
Figure 1 is a simplified illustration of a supply tank according to an embodiment of the invention, and
Figure 2 is a diagram illustrating a system according to an embodiment of the invention, and
Figure 2a is a simplified illustration of a section of a system according to the invention.

### Detailed description of invention

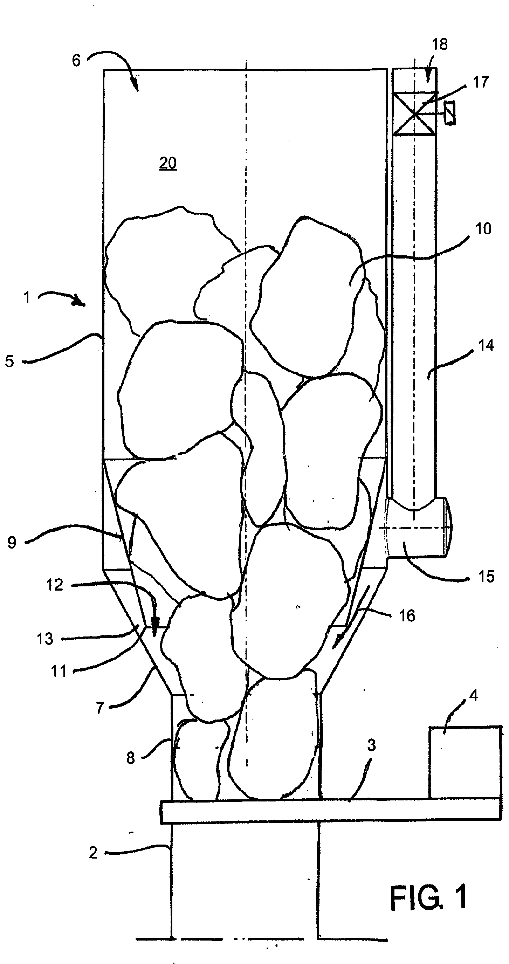

Figure 1 is a simplified illustration of the supply tank 1 of a feed point in a material conveying system according to the invention, viewed in cross-section. The supply tank 1 is connected to a conveyor pipe 2. In between the conveyor pipe and the supply tank, there is arranged a drain valve 3, which is used as an actuator 4. In the embodiment of Figure 1, the supply tank comprises a material space 20, defined by walls provided by a feed aperture 6 at the top end and an outlet aperture 8 at the bottom end. The material space comprises a cylindrical section 5, provided with a feed aperture 6 at the top part thereof. In between the cylindrical section 5 and the outlet aperture 8, there is arranged a narrowing section 7, which in the embodiment of the drawing has the shape of a truncated cone. After the narrowing section 7, the embodiment of the drawing includes a second cylindrical section, in connection with which there is provided the outlet aperture 8 of the supply tank. In between the outlet aperture 8 and the conveyor pipe 2, there is arranged the drain valve 3. In the embodiment of the drawing, the drain valve is shown in the closed position, in which case the connection from the material space 20 to the conveyor pipe is closed.

In Figure 1, in the material space 20 of the supply tank 1, there is arranged material 10, such as waste material, for example waste material packed in bags. The material is brought in the material space of the supply tank through the feed aperture 6. In connection with the feed aperture 6, there can be provided a hatch arrangement or the like, which is not illustrated in the drawing. Owing to gravity, the material in the material space 20 tends to be packed against the walls of the lower part thereof, and against the drain valve 3 of the outlet aperture 8, which means that in a conventional arrangement, there is the danger of blocking the outlet aperture of the supply tank, and in pneumatic systems, the danger of blocking the access of makeup air, which in the tank draining step is essential for the operation of the system. Consequently, a supply tank 1 according to the invention is provided with a narrowing partition wall 9, which extends from the cylindrical section 5 of the material space 20 towards the outlet aperture 8. The bottom part 11 of the wall extends to a distance from the outlet aperture 8. The partition wall 9 defines the material space 20 at the bottom part thereof. The bottom part of the partition wall 9 is provided with a partition wall aperture 12, through which the material is conveyed towards the outlet aperture 8.

For the makeup air, the supply tank is provided with a separate makeup air channel 14, provided with an inlet aperture 18. The makeup air channel 14 is provided with a valve element 17 for adjusting the access of makeup air to the vicinity of the outlet aperture 8 via the makeup air channel 14.

The makeup air channel 14 is connected to the supply tank 1, so that the inlet conduit 15 of the makeup air channel is opened to a space that is in a passage connection of the medium agent to the vicinity of the outlet aperture 8 of the supply tank, preferably to the section left between the drain valve 3 and the bottom part 11 of the partition wall 9. The shape of the medium agent path 13, through which makeup air proceeds to the vicinity of the outlet aperture 8, can vary according to the embodiment in question. In the drawing, the medium agent path 13 is an annular space surrounding at least the bottom part of the partition wall 9, at least partly from outside. In the embodiment of the drawing, the medium agent path 13 is arranged in the section left between the bottom part 11 of the partition wall 9 and the narrowing section 7. The bottom part of the annular path includes at least one gap, through which makeup air has access to the vicinity of the outlet aperture 8. This is realized even if the material space 20 were packed full of the material 10. In Figure 1, the motion of the makeup air from the makeup air channel 14 via the medium agent path 13 towards the outlet aperture 8 and the conveyor pipe 2 is illustrated by an arrow 16, in a situation where the drain valve 3 is opened and suction is on in the conveyor pipe.

An arrangement according to Figure 1 functions as follows. When material 10, such as garbage bags, collected on the tank bottom should be discharged, the drain valve 3 is opened, so that the underpressure prevailing in the conveyor pipe has access to affect in the vicinity of the outlet aperture, and makeup air can, through the pipe 14, flow via the medium agent path 13 to the vicinity of the outlet aperture. Owing to the location and shape of the makeup air inlet point, which in the drawing is annular, as well as owing to the location and shape of the partition wall 9, the suction and makeup air affect the materials located in the vicinity of the feed aperture 8, such as garbage bags, so that they are not jammed and do not block the outlet aperture, but are conveyed in a desired way to the conveyor pipe 2. When the draining of the material to the conveyor pipe has ended, the drain valve 3 is closed. The valve 17 possibly provided in the makeup air pipe 14 can also be closed when desired.

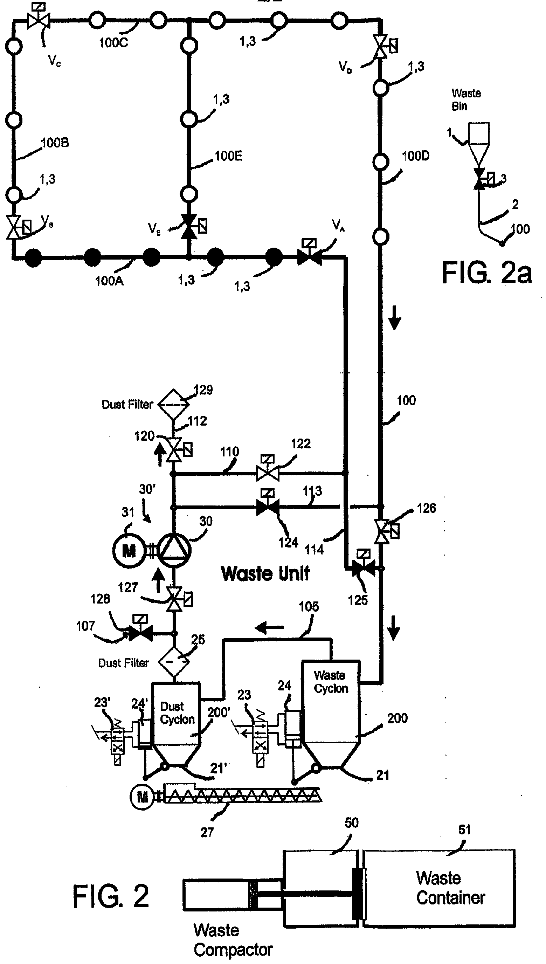

Figure 2 is a simplified diagram illustrating a pneumatic material conveying system, particularly a waste conveying system, applying an embodiment of the invention. The drawing depicts a main material conveyor pipe 100, along which there is arranged at least one, typically several feed points 1. A feed point 1 is the feed station of the material to be conveyed, particularly waste material, through which the material to be conveyed, particularly waste material, such as household waste, is fed to the conveying system. The system may comprise several feed stations 1, through which the material to be conveyed is fed to a first conveyor piping 2, 100, 100A, 100B, 100C, 100D, 100E. In the drawing, the feed station 1 is marked by a spot, and by opening and closing the locking element, such as a valve element, i.e. a drain valve element 3, provided in connection with the feed station, material can be conveyed from the feed point to the conveyor pipe 2 and further to the main conveyor pipe 100. Figure 2a illustrates in more detail a feed point 1 and its drain valve 3 used in a system according to the invention. On the side of the valve 3, the feed point is connected to the conveyor pipe 2 and further to the main conveyor pipe 100. Typically the conveyor piping comprises a main conveyor pipe 100, to which there can be connected several branch conveyor pipes, to which in turn there can be connected several feed stations 1. The supplied material is conveyed along the conveyor piping 2, 100, 100A, 100B, 100C, 100D to the separator device 200, where the material to be conveyed is separated, for instance as the speed drops and owing to the centrifugal force, from the conveyor air. The separated material is removed, for example when needed, from the separator device 200 to a material container, such as a waste container 51, or to further processing. The material container may comprise, as in the embodiment of the drawings, a baling press 50, by which the material is condensed by pressing to a smaller size, and from where the material is further transported to the waste container 51. In the embodiment of Figure 2, the separator device 200 is provided with material discharge elements 21, 24. From the separator device 200, there is arranged a conveyor air channel 105 to the means 30' for generating underpressure in the conveyor pipe. In the embodiment of Figure 2, the means for generating underpressure comprise a vacuum pump unit 30'. By the means for generating underpressure, there is achieved the underpressure required in the conveyor piping 2, 100 and/or part of it for conveying the material. The vacuum pump unit 30' comprises a vacuum pump 30, which is driven by an actuator 31. According to a preferred embodiment, the system comprises means for circulating conveyor air in the circuit, at least part of which is formed by the conveyor piping 100, 100A, 100B, 100C, 100D, 100D, 100E. In the embodiment of Figure 2, the conveyor piping can be divided into operating ranges or sub-circuits 100A, 100B, 100C, 100D, 100E, by means of valve elements V_{A}, V_{B}, V_{C}, V_{D}, i.e. sectional valves.

Figure 2 illustrates a situation where the valve element V_{A} is closed, so that conveyor air cannot circulate in the circuit. When the suction side of the vacuum generator 30' is connected directly or by intermediation of the conveyor air channel 105 to at least one separator device 200, 200', to which the outlet end of the conveyor pipe 100 in turn is connected, there is achieved underpressure in the conveyor pipe, at least in that part of the circuit that is located, with respect to the material conveying direction, in between the valve V_{A} and the separator device 200. The material proceeding direction and the air proceeding direction are in Figure 2 marked by arrows. Underpressure also prevails in that part of the circuit that is located in between the separator device 200 and the vacuum generator 30', i.e. in the conveyor air channel 105, and in the embodiment of the drawing, also in the second separator device 200' and in that part of the conveyor air channel 105 that extends from it to the vacuum generator 30'. In a case according to the drawing, when in the feed point 1 there is opened its valve element 3, the material batch to be conveyed proceeds through the conveyor pipe 2 to the main conveyor pipe 100A, to be further conveyed along the route 100A-100B-100C-100D-100 to the separator device 200. Makeup air is obtained in the conveyor pipe for example via the feed point 1 when opening the valve 3 to the conveyor pipe.

Thus the invention relates to a method comprising the features of claim 1. J

According to another preferred embodiment, material 10 is conducted by a partition wall 9, which is a wall narrowing towards the outlet aperture 8.

According to a preferred embodiment, makeup air is brought through a path that surrounds the bottom part 11 of the partition wall 9.

Typically in the method, material is fed to the conveyor pipe 2, 100 from material supply tanks 1, which are waste feed points, such as garbage bins or refuse chutes. In particular, the feed points 1 according to the invention are garbage bins. Typically the material 10 is waste material, such as waste material arranged in bags. The material can also be for example material to be recirculated, such as waste paper.

In the invention, makeup air is brought to the vicinity of the outlet aperture 8 through one or several gaps arranged in a circular range, so that the makeup air is directed towards the outlet aperture 8. Now the material located at the orifice of the outlet aperture can be efficiently manipulated, and an efficient transport of the material from the outlet aperture to the conveyor pipe can be achieved.

The invention also relates to the pneumatic material conveying system of claim 6.

According to a preferred embodiment, the partition wall element 9 is an element narrowing towards the outlet aperture 8. In the embodiment of Figure 1, the partition wall element 9 is an element with the shape of a truncated cone.

In the pneumatic material conveying system of the invention, the means for bringing makeup air in the system comprise either one circular gap, or several apertures or gaps 13 that are arranged along a circular range, most advantageously in the vicinity of the bottom part 11 of the partition wall element 9, preferably around it.

For a man skilled in the art, it is obvious that the invention is not restricted to the above described embodiments only, but it can be modified within the scope of the appended claims.

## Claims

1. A method for draining the tank space (20) of a supply tank (1) in a pneumatic material conveying system, such as a waste conveying system, from material (10), such as waste material, said conveying system comprising at least one supply tank (1); said tank comprising a tank space (20) and an outlet aperture (8); in which method the tank space is drained to a conveyor pipe (2, 100) by opening a drain valve (3), so that the underpressure prevailing in the conveyor pipe, together with the ambient pressure prevailing in the supply tank, conveys material from the supply tank to the conveyor pipe (2, 100), **characterized in that** in the method, makeup air is brought to the bottom part of the material space (20), to the section left between a bottom part of a partition wall (9) and the drain valve (3) via a path (13) that at least partly surrounds the partition wall (9), at least its bottom part (11), and through one or several gaps arranged in a circular range, so that the makeup air is directed towards the outlet aperture (8), and that the material (10) is guided by the partition wall element (9) towards the outlet aperture, so that the makeup air affects the material to be discharged (10) in the vicinity of the outlet aperture (8), at least during the draining step, and that the access of makeup air to the vicinity of the outlet aperture (8) is adjusted.

2. A method according to claim 1, **characterized in that** the material (10) is guided by a partition wall (9), which is a wall narrowing towards the outlet aperture (8).

3. A method according to claim 1 or 2, **characterized in that** makeup air is brought via a path (13) that surrounds the bottom part (11) of the partition wall (9).

4. A method according to any of the claims 1 - 3, **characterized in that** in the method, material is fed to the conveyor pipe (2, 100) from material supply tanks (1), which are waste feed points, such as garbage bins or refuse chutes.

5. A method according to any of the claims 1 - 4, **characterized in that** the material (10) is waste material, such as waste material arranged in bags.

6. A pneumatic material conveying system, such as a waste conveying system, comprising a conveyor pipe and supply tank (1), which comprises an outlet aperture (8) and a material space (20) that can be connected to a conveyor pipe (2, 100) by opening a drain valve (3), **characterized in that** the supply tank includes means for bringing makeup air to the bottom part of the material space (20), to the section located between the bottom part of a partition wall (9) and the drain valve (3) via a path (13) that at least partly surrounds the partition wall (9), at least its bottom part (11), and that the means for bringing makeup air comprise one circular gap, or several apertures or gaps (13), which are arranged in a circular range, most suitably in the vicinity of the bottom part (11) of the partition wall element (9), preferably around the bottom part of the partition wall element (9), and the partition wall element (9) for guiding the material (10) to be conveyed towards the outlet aperture (8), the supply tank (1) is configured so that in use during the draining step, the makeup air affects the material to be discharged (10) in the vicinity of the outlet aperture (8), and said means for bringing makeup air comprise a makeup air channel (14) provided with an inlet aperture (18) and a valve element (17) for adjusting access of makeup air to the section located between the bottom part of the partition wall (9) and the drain valve (3).

7. A system according to claim 6, **characterized in that** the partition wall element (9) is an element narrowing towards the outlet aperture (8).

8. A system according to claim 6 or 7, **characterized in that** the partition wall element (9) is an element with the shape of a truncated cone.

9. A system according to any of claim 6-8, **characterized in that** the means for bringing makeup air comprise a path (13) that surrounds the bottom part (11) of the partition wall (9).

## Patentansprüche

1. Verfahren zum Entleeren des Tankraums (20) eines Vorratsbehälters (1) in einem pneumatischen Materialfördersystem, wie z. B. einem Abfallfördersystem, von Material (10), wie z. B. Abfallmaterial, wobei das Fördersystem mindestens einen Vorratsbehälter (1) umfasst; wobei der Tank einen Tankraum (20) und eine Auslassöffnung (8) aufweist; wobei der Tankraum zu einem Förderrohr (2, 100) durch Öffnen eines Ablassventils (3) entleert wird, so dass der in der Förderleitung herrschende Unterdruck zusammen mit dem im Vorratsbehälter herrschenden Umgebungsdruck Material aus dem Vorratsbehälter in das Förderrohr (2, 100) fördert, **dadurch gekennzeichnet, dass** bei dem Verfahren Zuluft in den unteren Teil des Materialraums (20) zugeführt wird, zu dem Abschnitt der zwischen einem unteren Teil einer Trennwand (9) und dem Ablassventil (3) belassen wurde über einen Weg (13), der zumindest teilweise die Trennwand (9), zumindest deren unteren Teil (11), umgibt, und Zuluft durch einen oder mehrere in einem kreisförmigen Bereich angeordnete Spalte zugeführt wird, so dass die Zuluft zur Austrittsöffnung (8) geleitet wird, und dass das Material (10) durch das Trennwandelement (9) in Richtung der Austrittsöffnung geführt wird, so dass die Zuluft zumindest während des Entleerungsschritts auf das auszutragende Material (10) in der Nähe der Auslassöffnung (8) einwirkt und dass der Zugang der Zuluft in die Nähe der Auslassöffnung (8) eingestellt ist.

2. Verfahren nach Anspruch 1, **dadurch gekennzeichnet, dass** das Material (10) durch eine Trennwand (9) geführt wird, die eine sich zur Auslassöffnung (8) hin verjüngende Wand darstellt.

3. Verfahren nach Anspruch 1 oder 2, **dadurch gekennzeichnet, dass** Zuluft über einen Weg (13) zugeführt wird, der den unteren Teil (11) der Trennwand (9) umgibt.

4. Verfahren nach einem der Ansprüche 1 - 3, **dadurch gekennzeichnet, dass** bei dem Verfahren Material aus Vorratsbehältern (1), die Abfallzufuhrstellen wie Mülltonnen oder Müllschächte sind, dem Förderrohr (2, 100) zugeführt wird.

5. Verfahren nach einem der Ansprüche 1 bis 4, **dadurch gekennzeichnet, dass** das Material (10) Abfallmaterial ist, wie z. B. in Säcken angeordnetes Abfallmaterial.

6. Pneumatisches Materialfördersystem, wie z. B. ein Abfallfördersystem, umfassend ein Förderrohr und einen Vorratsbehälter (1), der eine Auslassöffnung (8) und einen Materialraum (20) aufweist, der durch Öffnen eines Ablassventils (3) mit einem Förderrohr (2, 100) verbunden werden kann, **dadurch gekennzeichnet, dass** der Vorratsbehälter Mittel zum Zuführen von Zuluft in den unteren Teil des Materialraums (20) aufweist, zu dem zwischen dem unteren Teil einer Trennwand (9) und dem Ablassventil (3) befindlichen Abschnitt über einen Weg (13), der die Trennwand (9), zumindest ihren unteren Teil (11), zumindest teilweise umgibt, und dass die Mittel zum Zuführen von Zuluft einen kreisförmigen Spalt oder mehrere Öffnungen oder Spalten (13) umfassen, die in einem kreisförmigen Bereich angeordnet sind, am besten geeignet in der Nähe des unteren Teils (11) des Trennwandelements (9), vorzugsweise um den unteren Teil des Trennwandelements (9), und das Trennwandelement (9) zur Zuführung des zu fördernden Materials (10) in Richtung der Austrittsöffnung (8) der Vorratsbehälter (1) so ausgebildet ist, dass bei der Verwendung während des Entleerungsschritts die Zuluft auf das auszutretende Material (10) in der Nähe der Auslassöffnung (8) wirkt, und die Mittel zum Zuführen von Zuluft umfassen einen Zuluftkanal (14), der mit einer Einlassöffnung (18) versehen ist, und ein Ventilelement (17) zum Einstellen des Zugangs von Zuluft zu dem Abschnitt, der sich zwischen dem unteren Teil der Trennwand (9) und dem Ablassventil (3) befindet.

7. System nach Anspruch 6, **dadurch gekennzeichnet, dass** das Trennwandelement (9) ein Element ist, das sich zur Austrittsöffnung (8) hin verjüngt.

8. System nach Anspruch 6 oder 7, **dadurch gekennzeichnet, dass** das Trennwandelement (9) ein Element mit der Form eines Kegelstumpfes ist.

9. System nach einem der Ansprüche 6 - 8, **dadurch gekennzeichnet, dass** die Mittel zum Zuführen von Zusatzluft einen Weg (13) umfassen, der den unteren Teil (11) der Trennwand (9) umgibt.

## Revendications

1. Procédé pour l'évacuation de matières (10), telles que des matières de déchets, de l'espace (20) de réservoir d'un réservoir (1) d'alimentation dans un système pneumatique de transport de matériau tel qu'un système de transport de déchets, ledit système de transport comprenant au moins un réservoir (1) d'alimentation ; ledit réservoir comprenant un espace (20) de réservoir et une ouverture (8) de sortie ; dans lequel procédé l'espace de réservoir est évacué vers un conduit (2, 100) de transporteur par l'ouverture d'une vanne (3) d'évacuation, de sorte que la dépression régnant dans le conduit de transporteur, conjointement avec la pression ambiante régnant dans le réservoir d'alimentation, transporte des matières du réservoir d'alimentation au conduit (2, 100) de transporteur, **caractérisé en ce que** dans le procédé, de l'air d'appoint est amené à la partie inférieure de l'espace (20) de matières, jusqu'à la section laissée entre une partie inférieure d'une paroi (9) formant cloison et la vanne (3) d'évacuation via un passage (13) qui encercle au moins partiellement la paroi (9) formant cloison, au moins sa partie (11) inférieure, et à travers un ou plusieurs interstices agencés dans une plage circulaire, de sorte que l'air d'appoint est dirigé vers l'ouverture (8) de sortie et que les matières (10) sont guidées par l'élément de paroi (9) formant cloison vers l'ouverture de sortie, de sorte que l'air d'appoint affecte les matières (10) devant être évacuées au voisinage de l'ouverture (8) de sortie, au moins pendant l'étape d'évacuation, et que l'accès de l'air d'appoint jusqu'au voisinage de l'ouverture (8) de sortie est ajusté.

2. Procédé selon la revendication 1, **caractérisé en ce que** les matières (10) sont guidées par une paroi (9) formant cloison, qui est une paroi se rétrécissant vers l'ouverture (8) de sortie.

3. Procédé selon la revendication 1 ou la revendication 2, **caractérisé en ce que** de l'air d'appoint est amené via un passage (13) qui encercle la partie (11) inférieure de la paroi (9) formant cloison.

4. Procédé selon l'une quelconque des revendications 1 à 3, **caractérisé en ce que** dans le procédé, des matières sont apportées jusqu'au conduit (2, 100) de transporteur à partir de réservoirs (1) d'alimentation en matières, qui sont des points d'apport de déchets, tels que des bennes à ordures ou des vide-ordures.

5. Procédé selon l'une quelconque des revendications 1 à 4, **caractérisé en ce que** les matières (10) sont des matières de déchets, telles que des matières de déchets agencées dans des sacs.

6. Système pneumatique de transport de matériau, tel qu'un système de transport de déchets, comprenant un conduit de transporteur et un réservoir (1) d'alimentation, qui comprend une ouverture (8) de sortie et un espace (20) de matières qui peut être raccordé à un conduit (2, 100) de transporteur par l'ouverture d'une vanne (3) d'évacuation, **caractérisé en ce que** le réservoir d'alimentation inclut des moyens pour amener de l'air d'appoint à la partie inférieure de l'espace (20) de matières, jusqu'à la section située entre la partie inférieure d'une paroi (9) formant cloison et la vanne (3) d'évacuation via un passage (13) qui encercle au moins partiellement la paroi (9) formant cloison, au moins sa partie (11) inférieure, et **en ce que** les moyens pour amener de l'air d'appoint comprennent un interstice circulaire, ou plusieurs ouvertures ou interstices (13), qui sont agencé(e)s dans une plage circulaire, de manière la plus appropriée au voisinage de la partie (11) inférieure de l'élément de paroi (9) formant cloison, de préférence autour de la partie inférieure de l'élément de paroi (9) formant cloison, et de l'élément de paroi (9) formant cloison pour guider les matières (10) devant être transportées vers l'ouverture (8) de sortie, le réservoir (1) d'alimentation est configuré de sorte qu'en utilisation, pendant l'étape d'évacuation, l'air d'appoint affecte les matières (10) devant être évacuées au voisinage de l'ouverture (8) de sortie, et lesdits moyens pour amener de l'air d'appoint comprennent un canal (14) d'air d'appoint muni d'une ouverture (18) d'entrée et d'un élément (17) formant vanne pour ajuster l'accès d'air d'appoint à la section située entre la partie inférieure de la paroi (9) formant cloison et la vanne (3) d'évacuation.

7. Système selon la revendication 6, **caractérisé en ce que** l'élément de paroi (9) formant cloison est un élément se rétrécissant vers l'ouverture (8) de sortie.

8. Système selon la revendication 6 ou la revendication 7, **caractérisé en ce que** l'élément de paroi (9) formant cloison est un élément ayant la forme d'un cône tronqué.

9. Système selon l'une quelconque des revendications 6 à 8, **caractérisé en ce que** les moyens pour amener de l'air d'appoint comprennent un passage (13) qui encercle la partie (11) inférieure de la paroi (9) formant cloison.
